# EUROPÄISCHE PATENTSCHRIFT

(11) **EP 1 181 258 B1**
(45) Veröffentlichungstag und Bekanntmachung des Hinweises auf die Patenterteilung: **17.07.2002**
(21) Anmeldenummer: 00965753.7
(22) Anmeldetag: 16.08.2000
(51) Int. Cl.: C03C 27/12, B32B 17/10, C08L 29/14

(54) **VERBUNDSICHERHEITSGLAS SOWIE PVB-FOLIE ZU SEINER HERSTELLUNG**
COMPOUND SAFETY GLASS AND PVB FOIL FOR THE PRODUCTION THEREOF
VERRE FEUILLETE DE SECURITE ET FEUILLE EN PVB POUR SA PRODUCTION

(30) Priorität: 16.08.1999 DE 19938159
(43) Veröffentlichungstag der Anmeldung: 27.02.2002
(73) Patentinhaber: HT TROPLAST AG, 53840 Troisdorf (DE)
(72) Erfinder: KELLER, Uwe, 53757 Sankt Augustin (DE); KOLL, Bernhard, 53757 Sankt Augustin (DE); STENZEL, Holger, 53773 Hennef (DE)
(86) Internationale Anmeldenummer: DE0002743
(87) Internationale Veröffentlichungsnummer: WO0119747

(56) Entgegenhaltungen:
- EP-A- 0 041 229
- US-A- 5 332 774
- DATABASE CHEMABS [Online] CHEMICAL ABSTRACTS SERVICE, COLUMBUS, OHIO, US; TAJIMA, OKISHI ET AL.: "Poly(vinyl butyral) compositions with excellent cold resistance and mechanical properties" retrieved from STN Database accession no. 130:326067HCA XP002158657 & JP 11 106595 A (ASAHI DENKA KOGYO K.K.) 20. April 1999 (1999-04-20)
- DATABASE CHEMABS [Online] CHEMICAL ABSTRACTS SERVICE, COLUMBUS, OHIO, US; UEDA, NAOKI ET AL: "Middle layer for laminated glass with good sound insulation for wide-rang temperature" retrieved from STN Database accession no. 122:11750 HCA XP002158658 & JP 06 115980 A (SEKISUI CHEMICAL CO LTD, JAPAN) 26. April 1994 (1994-04-26)

## Beschreibung

### Technisches Gebiet

Die Erfindung betrifft ein Verbundsicherheitsglas mit verbesserten akustischen Eigenschaften sowie eine PVB-Folie zu ihrer Herstellung. Verbundsicherheitsgläser bestehen im allgemeinen aus zwei Glasscheiben und einer die Glasscheiben verbindenden Klebfolie. Als Klebfolie wird ganz überwiegend eine Folie aus weichmacherhaltigen teilacetalisierten Polyvinylalkoholen, insbesondere aus Polyvinylbutyral (PVB) verwendet. Die eingangs genannten Verbundsicherheitsgläser werden beispielsweise als Windschutzscheiben im Kraftfahrzeugbereich sowie als Verglasung im Baubereich eingesetzt.

Als Weichmacher für PVB finden kommerziell überwiegend aliphatische Diester des Tri- bzw. Tetraethylenglykols Verwendung. Hierzu zählen 3GH, 3G7, 3G8 sowie 4G7, bei denen die vorangestellte Ziffer auf die Anzahl n der Wiederholungseinheit H-(O-CH₂-CH₂)ₙ-OH des Oligoethylenglykol-Anteils und H auf 2-Ethylbutyrat, 7 auf n-Heptanoat und 8 auf 2-Ethylhexanoat verweist. Weitere bekannte Weichmacher für Polyvinylbutyral sind u. A. Dialkyladipate mit aliphatischen bzw. cycloaliphatischen Esteranteilen, Dialkylsebazate, Triorganophosphate, Triorganophosphite oder Phthalatweichmacher wie Benzylbutylphthalat.

Verbundsicherheitsgläser weisen eine im Vergleich zu monolithischen Glasscheiben gleicher Gesamtstärke höhere akustische Dämpfung auf. Dieses ist darauf zurückzuführen, daß die PVB-Folie aufgrund ihrer Elastizität die mechanische Kopplung der Einzelscheiben vermindert und so die Übertragung von Schwingungen der der Schallquelle zugewandten Scheibenseite auf die abgewandte Scheibenseite erschwert.

Die Effizienz der Dämpfung einer Verglasung läßt sich als Funktion der Frequenz gemäß DIN 52210 bzw. DIN EN ISO 717 bestimmen und wird dann durch das bewertete Schalldämmaß R_{w} ausgedrückt, welches einem gewichteten Mittelwert über den bauakustisch relevanten Frequenzbereich von 100 Hz - 3150 Hz entspricht. Hierbei steht ein höherer Wert R_{w} für eine bessere akustische Dämpfung der Verglasung. Beispielsweise läßt sich mit einer herkömmlichen Verbundglasscheibe des Aufbaus 3 mm Glas/0,38 mm PVB-Folie/3 mm Glas ein R_{w} von 33 dB erzielen, während für eine monolithische Scheibe der Dicke 6 mm 32 dB gemessen werden.

Das Dämpfungsverhalten der bekannten Verbundsicherheitsgläser ist jedoch für viele Anwendungszwecke nicht ausreichend. Mißt man bei Raumtemperatur die akustische Dämpfung eines Verbundsicherheitsglases gemäß dem Stand der Technik mit einer herkömmlichen PVB-Folie als Zwischenschicht, so steigt die Dämpfung mit steigender Frequenz in weiten Bereichen stetig und angenähert linear an, wobei jedoch insbesondere im Frequenzbereich zwischen ca. 1.000 und 3.500 Hz ein deutlicher Einbruch der Dämpfung (relatives Minimum der Dämpfung, Koinzidenzeinbruch) zu beobachten ist. Die Lage dieses Koinzidenzeinbruchs ist abhängig von der Dicke der verwendeten Gläser. Bei Verwendung von Glasscheiben einer Dicke von je 4 mm liegt der Koinzidenzeinbruch etwa im Bereich von 1.250 bis 2500 Hz, bei Verwendung dünnerer Scheiben verschiebt sich der Bereich des Dämpfungseinbruchs zu höheren Frequenzen, während dieser Bereich bei Verwendung dickerer Glasscheiben zu niedrigeren Frequenzen hin verschoben wird. Die Frequenz, bei der die Dämpfungskurve im Bereich des Koinzidenzeinbruchs das relative Minimum durchläuft, wird im folgenden Koinzidenzfrequenz genannt.

### Stand der Technik

Es wurden in der Vergangenheit bereits Vorschläge gemacht, das akustische Dämpfungsverhalten von Verbundsicherheitsgläsern zu verbessern. Aus der US 5,773,102 (= EP 0 763 420 A1) und der JP 07-097241 A ist ein Verbundsicherheitsglas bekannt, bei dem zur Verbesserung der akustischen Eigenschaften neben einer Standard-PVB-Folie eine spezielle, akustisch wirksame Folie eingesetzt wird.

In der DE 197 05 586 C1 und der EP 0 844 075 A1 wird für eine schalldämpfende Verbundglasscheibe für Kraftfahrzeuge ebenfalls eine mehrschichtige thermoplastische Zwischenschicht vorgeschlagen. Der Verbund besteht aus einer viskoelastischen Acrylpolymerfolie, die auf beiden Seiten unter Zwischenschaltung jeweils einer 0,01 bis 0,1 mm dicken Folie aus Polyethylentherephthalat und jeweils einer thermoplastischen Klebefolie aus Polyvinylbutyral mit zwei Silikatglasscheiben verbunden ist.

Solche mehrschichtigen Zwischenschichten sind jedoch aufwendig in der Herstellung und häufig auch in der Weiterverarbeitung.

Aus der DE 24 61 775 A1 ist schließlich eine Verbundglasscheibe bekannt, die durch Zugabe sehr hoher Mengen an Standardweichmacher, hier Flexol, eine zwar verbesserte Schalldämmung erzielt, wobei die verwendete Weichmachermenge jedoch zu erhöhter Klebrigkeit führt, wodurch die Folie kaum mit herkömmlichen Anlagen weiterzuverarbeiten ist.

Die JP 11-106595 A betrifft einen PVB-Ansatz, der auf 100 Gew.-Teile Polyvinylbutyralharz 20 bis 80 Gew-% eines Ether-Ester-Weichmachers enthält. Der Weichmacher wiederum enthält 20 bis 60 Gew.-% Triethylenglykol bis (2-Ethylhexanoat) (3G8) und 40 - 80 Gew.-% eines zweifach substituierten Polyethylenglykols. Dieser Entgegenhaltung lag die Aufgabe zugrunde, einen PVB-Ansatz mit guter Tieftemperatur-Beständigkeit und guten mechanischen Eigenschaften des Verbundsicherheitsglases zu erreichen. Ein Hinweis auf eine verbesserte Schalldämmung findet sich in dieser Schrift nicht.

Aus der US 5,332,774 A ist eine für die Herstellung von Verbundsicherheitsglas geeignete weichmacherhaltige Folie aus teilacetalisierten Polyvinylalkoholen bekannt. Die Polyvinylalkohole werden mit 4-Hydroxy-Butanal acetalisiert. Die so hergestellten Polyvinylacetal-Harze können nach dieser Entgegenhaltung jedoch nicht mit herkömmlichen Weichmachern plastifiziert werden. Aus diesem Grunde werden spezielle Weichmacher eingesetzt, darunter auch bestimmte Polyalkylenglykole. Ein Hinweis auf eine Verbesserung der Schalldämm-Leistung gibt diese Schrift nicht.

Aus der EP 0 041 229 A ist die Verwendung von Poly(propylenoxid)-Derivaten als Weichmacher für PVB bekannt. Aus dieser Schrift ergeben sich keinerlei Hinweise auf bestimmte Mischungsverhältnisse mit Standard-Weichmachern oder auf die akustische Wirksamkeit solcher Weichmacher-Mischungen.

### Aufgabe

Aufgabe der vorliegenden Erfindung ist es daher, eine möglichst einschichtige Zwischenfolie für Verbundgläser auf der Basis von PVB zur Verfügung zu stellen, die bei weitgehend unveränderter Verarbeitbarkeit eine bei Raumtemperatur verbesserte Schalldämmung der daraus hergestellten Verbundgläser ermöglicht. Ein weiteres Anliegen der Erfindung ist es, Verbundgläser mit einer Zwischenschicht auf der Basis von PVB mit bei Raumtemperatur verbesserter Schalldämmung zur Verfügung zu stellen.

### Darstellung der Erfindung

Die Erfindung löst diese Aufgabe durch ein Verbundsicherheitsglas gemäß Anspruch 1, bevorzugt in Verbindung mit einem oder mehreren der Merkmale der Unteransprüche, bzw. durch eine schalldämmende Folie nach Anspruch 7 sowie die Verwendung bestimmter Polyalkylenglykole nach Anspruch 8.

Der Kern der vorliegenden Erfindung besteht darin, in einer PVB-Folie zusätzlich zu wenigstens einem ersten, an sich bekannten Weichmacher ein Polyalkylenglykol der Formel HO-(R-O)ₙ-H oder bestimmte davon abgeleitete Derivate als Weichmacher einzusetzen.

Polyalkylenglykol oder bestimmte davon abgeleitete Derivate als Co-Weichmacher in einer PVB-Folie bewirken im Vergleich zu konventionellen Weichmachern eine deutliche Verbesserung der Schalldämmung in den mit einer solchen Folie hergestellten Verbundgläsern. Insbesondere der sonst ausgeprägte Abfall der Schalldämmung im Koinzedenzbereich ist wesentlich schwächer ausgeprägt. Gegenüber einer Standard-Folien-Rezeptur kann der Anteil an Polyvinylbutyral und/oder des jeweils verwendeten Standard-Weichmachers in der PVB-Folie herabgesetzt und durch ein Polyalkylenglykol oder ein davon abgeleitetes Derivat substituiert werden. Die allgemeine Ausführungsform der Erfindung ist dadurch charakterisiert, daß das Polyalkylenglykol bzw. ein Derivat hiervon in Mischung mit einem oder mehreren konventionellen Weichmachern die Weichmachung des PVB-Harzes bewirkt.

In der allgemeinen Ausführungsform der Erfindung macht die Summe der weichmachenden Komponenten (Polyalkylenglykol + konventioneller Weichmacher) 20 bis 50 Gew.-% der Folie aus. In ihrer bevorzugten Ausführungsform beträgt der Gesamt-Weichmachergehalt 25 bis 40 Gew.-% und in der am meisten bevorzugten Form 30 bis 35 Gew.-%. Der Anteil des erfindungsgemäßen Polyalkylenglykols an der Folie beläuft sich dabei auf mehr als 5 Gew.-% und im bevorzugten Fall auf mehr als 10 Gew.-%, jeweils bezogen auf die gesamte Folienrezeptur.

Polyalkylenglykole im Sinne der Erfindung sind solche, die einen durchschnittlichen Polymerisationsgrad DP von 6 oder höher haben, der allerdings nicht so hoch ist, daß eine in Verbindung mit den übrigen Komponenten der Folie inakzeptable Trübung im Verbundglas eintritt. Als inakzeptabel anzusehen sind bei Messung gemäß ASTM D1003-6 Trübungswerte größer 3% Haze bzw. Abweichungen in ΔL größer 3, die bei einer Vergleichsmessung des mit PVB-Folie laminierten Glaspaares gegen ein Glaspaar ohne PVB-Folie gemäß L_{(Laminat)}-L_{(Glaspaar)} = ΔL nach DIN 5033 festgestellt werden. Bevorzugt liegen die Trübungswerte bei einer Folienstärke von 0,76 mm unter 1,5 %, insbesondere unter 1% Haze.

Bei den Polyalkylenglykolen im Sinne der Erfindung kann es sich im einzelnen um Poly(ethylenoxide) einschließlich Blockcopolymeren des Typs HO- (CH₂-CH₂-O)ₙ-(CH₂-CH(CH₃)-O)ₘ-H, Poly(propylenoxide) oder Poly(butylenoxide) sowie davon abgeleitete Derivate handeln, wobei Poly(propylenoxide) wegen der geringeren Wirksamkeit nicht bevorzugt sind. Für die nicht derivatisierten Polyalkylenglykole der Erfindung gilt, daß diese einen durchschnittlichen Polymerisationsgrad - im folgenden DP genannt - von mindestens 6 aufweisen sollten. Beispiele hierfür sind Pluriol® E 600 der Firma BASF mit einem durchschnittlichen Polymerisationsgrad DP von 13,6 sowie Pluriol® P 2000 der Firma BASF mit einem durchschnittlichen Polymerisationsgrad DP von 15,5.

Derivate von Polyalkylenglykolen im Sinne der Erfindung sind solche, bei denen der Wasserstoff von einer der beiden terminalen Hydroxygruppen des Polyalkylenglykols durch einen organischen Rest ersetzt ist. Als Beispiele hierfür können ethoxylierte Fettalkohole, ethoxylierte Fettsäuren wie Ölsäurepolyethylenglykolester oder Monoether des Polyalkylenglykols mit einfachen aliphatischen Alkoholen wie Methanol oder Ethanol dienen. Weitere Beispiele sind Marlophen® NP 6 der Firma Condea, welches aus einer Polyethylenglykol-Anteil mit einem DP von 6 und einem Isononylphenol-Anteil an einem der beiden Hydroxyl-terminierten Enden aufgebaut ist, sowie Marlipal® O 13/100 der Firma Condea, welches aus einem Polyethylenglykol-Anteil mit einem DP von 10 und einem C₁₃-Oxoalkohol aufgebaut ist. Für diese Monoderivate der Polyalkylenglykole gilt, daß der DP des Polyalkylenglykolanteils mindestens 2 betragen muß. Die Obergrenze des DP ergibt sich aus der Verträglichkeit mit den übrigen Komponenten der Folie.

Als Harze für die erfindungsgemäße Folie dienen an sich bekannte teilacetalisierte Polyvinylalkohole, insbesondere Polyvinylbutyral. Die teilacetalisierten Polyvinylalkohole werden in bekarnter Weise durch Acetalisierung von hydrolysierten Polyvinylestern hergestellt. Als Aldehyde können beispielsweise Formaldehyd, Acetaldehyd, Propionaldehyd, Butyraldehyd u. dgl., bevorzugt Butyraldehyd, verwendet werden. Das bevorzugte Polyvinylbutyral-Harz enthält 10 bis 25 Gew.-%, vorzugsweise 17 bis 23 Gew.-% und besonders bevorzugt 19 bis 22 Gew.-% Vinylalkoholreste. Das Polyvinylbutyral enthält ggf. zusätzlich 0 bis 20 Gew.-%, bevorzugt 0,5 bis 2,5 Gew.-% Acetatreste. Soweit in dieser Anmeldung allgemein der Begriff Polyvinylbutyral oder PVB verwendet wird, sind hiermit im allgemeinen auch die anderen teilacetalisierten Polyvinylalkohole gemeint.

Neben den oben beschriebenen erfindungsgemäßen Polyalkylenglykolen wird wenigstens ein weiterer Weichmacher verwendet. Bevorzugt ist dieses ein Standard-Weichmacher aus der Gruppe bestehend aus
- Estern von mehrwertigen aliphatischen oder aromatischen Säuren, z.B. Dialkyladipate wie Dihexyladipat, Dioctyladipat, Hexyl-cyclohexyladipat, Mischungen aus Heptyl- und Nonyladipaten, Diisononyladipat, Heptylnonyladipat sowie Ester der Adipinsäure mit cycloaliphatischen Esteralkoholen, Dialkylsebazate wie Dibutylsebazat, Phthalatestern wie Butylbenzylphthalat;
- Estern von mehrwertigen aliphatischen oder aromatischen Alkoholen oder Oligoetherglykolen mit höchstens vier Ethylenglykoleinheiten mit einem oder mehreren unverzweigen oder verzweigten aliphatischen oder aromatischen Substituenten, wie z.B. Estern von Di-, Tri- oder Tetraglykolen mit linearen oder verzweigten aliphatischen oder cycloaliphatischen Carbonsäuren; Als Beispiele für letztere Gruppe können dienen Diethylenglykol-bis-(2-ethylhexanoat), Triethylenglykol-bis-(2-ethylhexanoat), Triethylenglykol-bis-(2-ethylbutanoat), Tetraethylenglykol-bis-n-heptanoat, Triethylenglykol-bis-n-heptanoat, Tri-ethylenglykol-bis-nhexanoat.

Besonders bevorzugt werden als Standard-Weichmacher Di-n-hexyladipat (DHA) und Triethylenglykol-bis-n-heptanoat (3G7).

Zur Herstellung der erfindungsgemäßen PVB-Folie mit verbesserter akustischer Dämpfung wird die flüssige, pastöse oder feste Polyalkylenglykol-Komponente mit dem Standard-Weichmacher gemischt, so daß entweder eine homogene Lösung der Polyalkylenglykol-Komponente im Weichmacher oder bei Unverträglichkeit zwischen Polyalkylenglykol-Komponente und Weichmacher eine Dispersion entsteht. Die Mischung aus Weichmacher und Polyalkylenglykol-Komponente wird dann zusammen mit dem pulverförmigen Polyvinylbutyral unter Eintrag von Wärme und mechanischer Arbeit zu einer homogenen Folienmasse verarbeitet, welche bevorzugt durch eine Breitschlitzdüse zu einer Folienbahn ausgeformt wird. Als weitere Bestandteile können optional Farbstoffe, Lichtschutzmittel, Stabilisatoren, Verarbeitungshilfsmittel, Wasser sowie Haftungsregulatoren in der Folie enthalten sein.

Der Wassergehalt der Folien wird auf 0,15 bis 0,8 Gew.-%, bevorzugt auf 0,4 bis 0,7 Gew.-%, eingestellt.

Die erfindungsgemäßen Verbundsicherheitsgläser (VSG) weisen neben den verbesserten Dämpfungseigenschaften die die VSG auszeichnenden Eigenschaften wie Bruchfestigkeit, Splitterbindung und Transparenz auf. Beispielsweise ergeben sich bei der Haftungsprüfung zum Glas im Pummel-Test Werte von 8-10 für die Feuer-Seite und 7 für die Zinn-Seite des Glases.

### Wege zur Ausführung der Erfindung sowie Vergleichsbeispiel

### Beispiel 1

Zu 67 Gewichtsteilen eines Polyvinylbutyral-Harzes mit einem Vinylalkohol-Restgehalt (OH-Gruppen-Gehalt berechnet als Vinylalkoholgehalt) von 20,5 Gew.-% und einem Vinylacetat-Restgehalt von 0,7 Gew.-% wurden 22 Gewichtsteile von Triethylenglykol-bis-n-heptanoat (3G7) als Standard-Weichmacher zusammen mit 11 Gewichtsteilen Pluriol® 600, einem nicht-substituierten Poly(ethylenglykol) mit einem mittlerem Molekulargewicht von 600 [g/mol] bzw. einem mittleren Polymerisationsgrad DP von 13,6, sowie 0,15 Gewichtsteilen des UV-Absorbers Tinuvin® P (Hersteller: Fa. Ciba) gegeben. Die Mischung wurde in einem Doppelschnecken-Extruder mit Breitschlitzdüse bei ca. 200°C Massetemperatur zu einem transparenten Film der Dicke 0,76 mm extrudiert.

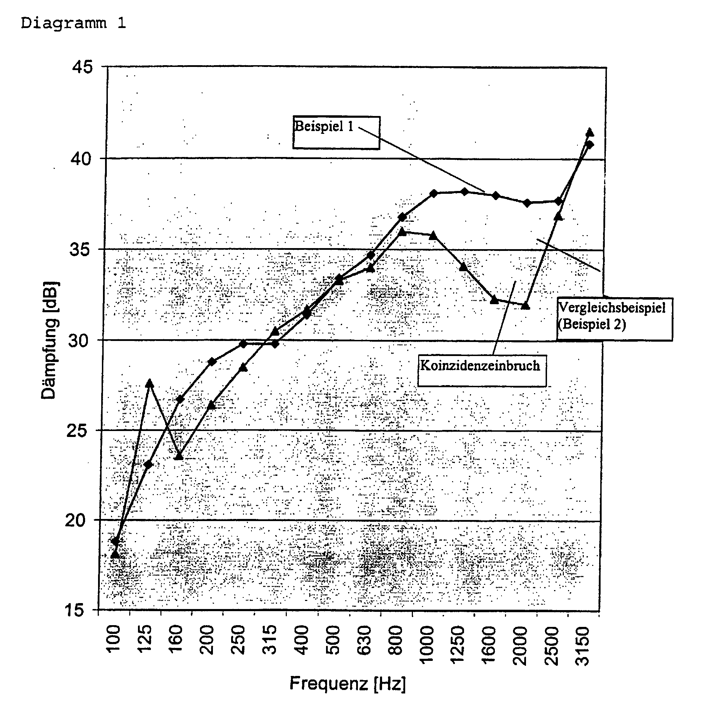

Die PVB-Folie wurden anschließend durch gleichzeitiges Erhitzen und Verpressen in einem Autoklav mit jeweils zwei Glasscheiben der Abmessungen 1480x1230x4 mm zu Verbundglasscheiben laminiert. Für diese Scheiben wurde gemäß DIN EN ISO 717 das bewertete Schalldämmaß R_{w} bestimmt, wobei ein Frequenzband von 50 Hz bis 5000 Hz im Terzabstand durchfahren wurde. Die Temperatur des Prüfkörpers und des Prüfraumes betrug 21 °C. Ergebnisse dieser Messungen sind in Diagramm 1 in Form einer Dämpfungskurve dargestellt, wobei höhere bei einer bestimmten Frequenz gemessene Werte eine bessere Dämpfung bedeuten.

### Vergleichsbeispiel (Beispiel 2)

Für die im Diagramm 1 zum Vergleich aufgeführte Dämpfungskurve eines Verbundglases mit dem Aufbau 4 mm Glas/0,76 Standard-PVB/4 mm Glas mit 26 Gew.-% 3G7 als Weichmacher läßt sich ein Einbruch der Dämpfung zwischen 1000 und 2000 Hz gut erkennen. Dieses Phänomen ist als Koinzidenzeinbruch bekannt und stellt eine - im Hinblick auf Schallschutz - charakteristische Schwachstelle von Verbundgläsern dar, die mit Standard-PVB hergestellt sind.

Das relative Minimum der Schalldämmung im Koinzedenzbereich liegt bei ca. 1.900 Hz, d. h., die Koinzidenzfrequenz beträgt 1.900 Hz. Die Dämpfung liegt bei dieser Frequenz mit ca. 31,5 dB um mehr als 5 dB unterhalb des entsprechenden Wertes bei der Folie gemäß Beispiel 1.

### Beispiele 3 bis 7

Wie in Beispiel 1 wurden die in der nachfolgenden Tabelle angeführten Beispiele 3 bis 7 durchgeführt. Die Schalldämmkurven für die Beispiele 3 bis 7 lagen dabei auf ähnlichem Niveau wie die gemäß Beispiel 1.

| Beispiel/ Bestandteil | 1 | 2 (Vergleich) | 3 | 4 | 5 | 6 | 7 |
|---|---|---|---|---|---|---|---|
| Polyvinylbutyral | 67 | 74 | 67 | 67 | 67 | 67 | 67 |
| DHA⁽¹⁾ | - | - | - | 22 | - | 22 | 22 |
| 3G7⁽²⁾ | 22 | 26 | 22 | - | 16.5 | | - |
| Pluriol® 600⁽³⁾ | 11 | - | - | 11 | - | | - |
| Marlophen® NP 12⁽⁴⁾ | - | - | 11 | - | 16.5 | | - |
| Marlophen® NP 6⁽⁵⁾ | - | - | - | - | - | | 11 |
| Poly-THF 650 ⁽⁶⁾ | | | | | | 11 | |
| UV-Absorber | 0,15 | 0,15 | 0,15 | 0,15 | 0,15 | 0,15 | 0,15 |
| Eigenschaft | | | | | | | |
| Foliendicke [mm] | 0,76 | 0,76 | 0,76 | 0,76 | 0,76 | 0,76 | 0,76 |
| Trübung ΔL | -0,32 | | | 0,01 | | 0,26 | -0,16 |
| R_{w}⁽⁷⁾ | 37,0 | 35,4 | 36,4 | 37,3 | 36,1 | 36,2 | 36,9 |

| | | | | | | | |
|---|---|---|---|---|---|---|---|
| ⁽¹⁾ Di-n-hexyladipat | | | | | | | |
| ⁽²⁾ Triethylenglykol-bis-n-heptanoat | | | | | | | |
| ⁽³⁾ Poly(ethylenglykol) mit einem mittlerem Molekulargewicht von 600 [g/mol] | | | | | | | |
| ⁽⁴⁾ Einseitig substituiertes PEG mit einem Polyethylenglykol-Anteil mit einem DP von 12 und einem Isononylphenol-Anteil an einem der beiden Hydroxyl-terminierten Enden. | | | | | | | |
| ⁽⁵⁾ Beidseitig substituiertes PEG mit einem Polyethylenglykol-Anteil mit einem DP von 6 und einem Isononylphenol-Anteil an einem der beiden Hydroxyl-terminierten Enden. | | | | | | | |
| ⁽⁶⁾ Polybutylenglykol mit einem DP von ca. 9 der Firma BASF. | | | | | | | |
| ⁽⁷⁾ Bewertetes Schalldämmaß in dB bei Messung gemäß DIN EN ISO 717. | | | | | | | |

Für sämtliche Folien der Beispiele werden im Verbundglas Trübungswerte gefunden, die niedrig und vergleichbar mit denjenigen eines Verbundglases sind, welches mit einer auf bekannte Weise weichgemachten PVB-Folie laminiert ist. Trotz des im Vergleich zum Vergleichsbeispiel 2 von 26 Gew.-% auf 33 Gew.-% erhöhten Gesamtweichmachergehalt wurde die Handhabbarkeit der Folie, insbesondere ihre Klebrigkeit, nicht nennenswert verschlechtert. Im Vergleich dazu wäre eine Folie mit 33 Gew.-% Gehalt an 3G7 wegen der hohen Klebrigkeit - durch Ausschwitzen von Weichmacher - kaum mit herkömmlichen Anlagen weiterzuverarbeiten.

## Patentansprüche

1. Verbundsicherheitsglas, umfassend
- eine erste und eine zweite Glasscheibe sowie
- eine zwischen der ersten und der zweiten Glasscheibe angeordnete Zwischenschicht, wobei die Zwischenschicht einen Wassergehalt von 0,15 bis 0,8 Gew.-% aufweist und enthält:
- 50 bis 80 Gew.-% teilacetalisierter Polyvinylalkohol
- 20 bis 50 Gew.-% einer Weichmachermischung, enthaltend
- 30 bis 70 Gew.-% - gerechnet als Anteil an der Weichmachermischung - eines oder mehrerer Polyalkylenglykole der Gruppe bestehend aus
- Polyalkylenglykolen der allgemeinen Formel HO-(R-O)ₙ-H mit R = Alkylen und n > 5,
- Blockcopolymeren aus Ethylen- und Propylenglykol der allgemeinen Formel HO-(CH₂-CH₂-O)ₙ-(CH₂-CH(CH₃)-O)ₘ-H mit n > 2, m > 3 und (n+m) < 25,
- Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO- (CH₂-CH₂-O)ₙ-(CH₂-CH(CH₃)-O)ₘ-R₁ mit n > 2, m > 3 und (n+m) < 25 und R₁ als organischem Rest,
- Derivate von Polyalkylenglykolen der allgemeinen Formel R₁-O-(R₂-O)ₙ-H mit R₂ = Alkylen und n ≥ 2, bei denen der Wasserstoff von einer der beiden terminalen Hydroxygruppen des Polyalkylenglykols durch einen organischen Rest R₁ ersetzt ist
- wobei der Anteil der Polyalkylenglykole am Gesamtansatz der Zwischenschicht größer als 5 Gew.-% ist.

2. Verbundsicherheitsglas nach Anspruch 1, **dadurch gekennzeichnet, daß** die Polyalkylenglykole ausgewählt sind aus der Gruppe bestehend aus
- Polyethylenglykol HO-(CH₂-CH₂-O)ₙ-H mit 8 < n < 25,
- Blockcopolymeren aus Ethylen- und Propylenglykol der allgemeinen Formel HO-(CH₂-CH₂-O)ₙ-(CH₂-CH(CH₃)-O)ₘ-H mit n > 3, m > 4 und (n+m) < 20,
- Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO- (CH₂-CH₂-O)ₙ-(CH₂-CH(CH₃)-O)ₘ-R₁ mit n > 3, m > 4 und (n+m) < 20 und R₁ als organischem Rest,
- Polybutylenglykol HO- (CH₂-CH₂-CH₂-CH₂-O)ₙ-H mit 4 < n < 18,
- Derivate des Polyethylenglykols der allgemeinen Formel R₁-O-(CH₂-CH₂-O)ₙ-H mit n ≥ 2 und R₁ als organischem Rest,
- Derivate des Polybutylenglykols der allgemeinen Formel R₁-O-(CH₂-CH₂-CH₂-CH₂-O)ₙ-H mit n ≥ 2 und R₁ als organischem Rest.

3. Verbundsicherheitsglas nach Anspruch 1 oder 2, **dadurch gekennzeichnet, daß** der Anteil der Polyalkylenglykole am Gesamtansatz der Zwischenschicht größer als 10 Gew.-% und kleiner als 25 Gew.-% ist.

4. Verbundsicherheitsglas nach einem der Ansprüche 1 bis 3, **dadurch gekennzeichnet, daß** als weiterer Weichmacher in der Weichmachermischung wenigstens ein Weichmacher verwendet wird aus der Gruppe bestehend aus
- Estern von mehrwertigen aliphatischen oder aromatischen Säuren,
- Estern von mehrwertigen aliphatischen oder aromatischen Alkoholen oder Oligoetherglykolen mit höchstens vier Ethereinheiten mit einem oder mehreren unverzweigen oder verzweigten aliphatischen oder aromatischen Substituenten, wie z.B. Dialkyladipat, Dialkylsebazat, Ester von Di-, Tri- oder Tetraglykolen mit linearen oder verzweigten aliphatischen Carbonsäuren

5. Verbundsicherheitsglas nach Anspruch 4, **dadurch gekennzeichnet, daß** als weiterer Weichmacher mit einem Mengenanteil > 10 Gew.-% des Gesamtansatzes wenigstens ein Weichmacher verwendet wird aus der Gruppe bestehend aus Di-n-hexyladipat (DHA) und Triethylenglykol-bis-n-heptanoat (3G7).

6. Verbundsicherheitsglas nach einem der Ansprüche 1 bis 5, **dadurch gekennzeichnet, daß** als Harz ein Polyvinylbutyral mit 19 bis 22 Gew.-% Vinylalkoholrest und 0,5 bis 2,5 Gew.-% Acetatrest verwendet wird.

7. Schalldämmende Folie zur Herstellung von Verbundsicherheitsgläsern, enthaltend:
- 0,15 bis 0,8 Gew.-% Wasser,
- 50 bis 80 Gew.-% teilacetalisierter Polyvinylalkohol,
- 20 bis 50 Gew.-% einer Weichmachermischung, enthaltend
- 30 bis 70 Gew.-% - gerechnet als Anteil an der Weichmachermischung - eines oder mehrerer Polyalkylenglykole der Gruppe bestehend aus
- Polyalkylenglykolen der allgemeinen Formel HO-(R-O)ₙ-H mit R = Alkylen und n > 5,
- Blockcopolymeren aus Ethylen- und Propylenglykol der allgemeinen Formel HO-(CH₂-CH₂-O)ₙ-(CH₂-CH(CH₃)-O)ₘ-H mit n > 2, m > 3 und (n+m) < 25,
- Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO-(CH₂-CH₂-O)ₙ-(CH₂-CH(CH₃)-O)ₘ-R₁ mit n > 2, m > 3 und (n+m) < 25 und R₁ als organischem Rest,
- Derivate von Polyalkylenglykolen der allgemeinen Formel R₁-O-(R₂-O)ₙ-H mit R₂ = Alkylen und n ≥ 2, bei denen der Wasserstoff von einer der beiden terminalen Hydroxygruppen des Polyalkylenglykols durch einen organischen Rest R₁ ersetzt ist,
- wobei der Anteil der Polyalkylenglykole am Gesamtansatz der Zwischenschicht größer als 5 Gew.-% ist.

8. Verwendung eines oder mehrerer Polyalkylenglykole der Gruppe bestehend aus
- Polyalkylenglykolen der allgemeinen Formel HO-(R-O)ₙ-H mit R = Alkylen und n > 5,
- Blockcopolymeren aus Ethylen- und Propylenglykol der allgemeinen Formel HO-(CH₂-CH₂-O)ₙ-(CH₂-CH(CH₃)-O)ₘ-H mit n > 2, m > 3 und (n+m) < 25,
- Derivaten von Blockcopolymeren aus Ethylen- und Propylenglykol der allgemeinen Formel R₁O-(CH₂-CH₂-O)ₙ-(CH₂-CH(CH₃)-O)ₘ-H bzw. HO-(CH₂-CH₂-O)ₙ-(CH₂-CH(CH₃)-O)ₘ-R₁ mit n > 2, m > 3 und (n+m) < 25 und R₁ als organischem Rest,
- Derivate von Polyalkylenglykolen der allgemeinen Formel R₁-O-(R₂-O)ₙ-H mit R₂ = Alkylen und n ≥ 2, bei denen der Wasserstoff von einer der beiden terminalen Hydroxygruppen des Polyalkylenglykols durch einen organischen Rest R₁ ersetzt ist,
als ein die Schalldämmung erhöhender Zusatz in aus weichgemachtem teilacetalisierten Polyvinylalkohol-Harz hergestellten Folien mit einem Wassergehalt von 0,15 bis 0,8 Gew.-% für Verbundsicherheitsgläser, wobei die Schalldämmung des Verbundsicherheitsglases durch den Zusatz der Polyalkylenglykole bei der Koinzidenzfrequenz im Bereich von 1.000 bis 3.500 Hz um mindestens 2 dB, gemessen nach DIN EN ISO 717, erhöht wird.

## Claims

1. Laminated safety glass, comprising
- a first and a second pane of glass, and also,
- arranged between the first and the second pane of glass, an intermediate layer, where the intermediate layer has a water content of from 0.15 to 0.8% by weight and comprises:
- from 50 to 80% by weight of partially acetalized polyvinyl alcohol
- from 20 to 50% by weight of a plasticizer mixture, comprising
- from 30 to 70% by weight - calculated as proportion of the plasticizer mixture - of one or more polyalkylene glycols selected from the group consisting of
- polyalkylene glycols of the general formula HO-(R-O)ₙ-H, where R = alkylene and n > 5,
- block copolymers of ethylene glycol and propylene glycol having the general formula HO- (CH₂-CH₂-O)ₙ- (CH₂-CH(CH₃)-O)ₘ-H, where n > 2, m > 3, and (n+m) < 25,
- derivatives of block copolymers of ethylene glycol and propylene glycol having the general formula R₁O-(CH₂-CH₂-O)ₙ-(CH₂-CH(CH₃)-O)ₘ-H or HO- (CH₂-CH₂-O)ₙ- (CH₂-CH(CH₃)-O)ₘ-R₁, where n > 2, m > 3, and (n+m) < 25 and R₁ as organic radical,
- derivatives of polyalkylene glycols of the general formula R₁-O-(R₂-O)ₙ-H, where R₂ = alkylene and n ≥ 2, in which the hydrogen of one of the two terminal hydroxyl groups of the polyalkylene glycol has been replaced by an organic radical R₁,
- the proportion of the polyalkylene glycols in the total mixture for the intermediate layer being greater than 5% by weight.

2. Laminated safety glass according to claim 1, **characterized in that** the polyalkylene glycols have been selected from the group consisting of
- polyethylene glycol HO-(CH₂-CH₂-O)ₙ-H, where 8 < n < 25,
- block copolymers of ethylene glycol and propylene glycol having the general formula HO-(CH₂-CH₂-O)ₙ-(CH₂-CH(CH₃)-O)ₘ-H, where n > 3, m > 4, and (n+m) < 20,
- derivatives of block copolymers of ethylene glycol and propylene glycol having the general formula R₂O-(CH₂-CH₂-O)ₙ-(CH₂-CH(CH₃)-O)ₘ-H or HO-(CH₂-CH₂-O)ₙ-(CH₂-CH(CH₃)-O)ₘ-R₁, where n > 3, m > 4, and (n+m) < 20 and R₁ as organic radical,
- polybutylene glycol HO- (CH₂-CH₂-CH₂-CH₂-O)ₙ-H, where 4 < n < 18,
- derivatives of the polyethylene glycol of the general formula R₁-O-(CH₂-CH₂-O)ₙ-H, where n ≥ 2 and R₁ is an organic radical,
- derivatives of the polybutylene glycol of the general formula R₁-O-(CH₂-CH₂-CH₂-CH₂-O)ₙ-H, where n ≥ 2 and R₁ is an organic radical.

3. Laminated safety glass according to claim 1 or 2, **characterized in that** the proportion of the polyalkylene glycols in the total mixture for the intermediate layer is greater than 10% by weight and less than 25% by weight.

4. Laminated safety glass according to any of claims 1 to 3, **characterized in that** at least one plasticizer selected from the group consisting of
- esters of polybasic aliphatic or aromatic acids,
- polyhydric aliphatic or aromatic alcohols or oligoether glycols having not more than four ether units with one or more unbranched or branched aliphatic or aromatic substituents, e.g. dialkyl adipate, dialkyl sebacate, esters of di-, tri- or tetraglycols with linear or branched aliphatic carboxylic acids
is used as further plasticizer in the plasticizer mixture.

5. Laminated safety glass according to claim 4, **characterized in that** at least one plasticizer selected from the group consisting of di-n-hexyl adipate (DHA) and triethylene glycol bis-n-heptanoate (3G7) is used as further plasticizer at a proportion > 10% by weight of the total mixture.

6. Laminated safety glass according to any of claims 1 to 5, **characterized in that** a polyvinyl butyral having from 19 to 22% by weight of vinyl alcohol radical and from 0.5 to 2.5% by weight of acetate radical is used as resin.

7. Sound-insulation film for producing laminated safety glass, comprising:
- from 0.15 to 0.8% by weight of water,
- from 50 to 80% by weight of partially acetalized polyvinyl alcohol,
- from 20 to 50% by weight of a plasticizer mixture, comprising
- from 30 to 70% by weight - calculated as proportion of the plasticizer mixture - of one or more polyalkylene glycols selected from the group consisting of
- polyalkylene glycols of the general formula HO-(R-O)ₙ-H, where R = alkylene and n > 5,
- block copolymers of ethylene glycol and propylene glycol having the general formula HO- (CH₂-CH₂-O)ₙ-(CH₂-CH(CH₃)-O)ₘ-H, where n > 2, m > 3, and (n+m) < 25,
- derivatives of block copolymers of ethylene glycol and propylene glycol having the general formula R₁O-(CH₂-CH₂-O)ₙ-(CH₂-CH(CH₃)-O)ₘ-H or HO-(CH₂-CH₂-O)ₙ-(CH₂-CH(CH₃)-O)ₘ-R₁, where n > 2, m > 3, and (n+m) < 25 and R₁ as organic radical,
- derivatives of polyalkylene glycols of the general formula R₁-O-(R₂-O)ₙ-H, where R₂ = alkylene and n ≥ 2, in which the hydrogen of one of the two terminal hydroxyl groups of the polyalkylene glycol has been replaced by an organic radical R₁,
- the proportion of the polyalkylene glycols in the total mixture for the intermediate layer being greater than 5% by weight.

8. Use of one or more polyalkylene glycols selected from the group consisting of
- polyalkylene glycols of the general formula HO-(R-O)ₙ-H, where R = alkylene and n > 5,
- block copolymers of ethylene glycol and propylene glycol having the general formula HO-(CH₂-CH₂-O)ₙ-(CH₂-CH(CH₃)-O)ₘ-H, where n > 2, m > 3, and (n+m) < 25,
- derivatives of block copolymers of ethylene glycol and propylene glycol having the general formula R₁O-(CH₂-CH₂-O)ₙ-(CH₂-CH(CH₃)-O)ₘ-H or HO-(CH₂-CH₂-O)ₙ-(CH₂-CH(CH₃)-O)ₘ-R₁, where n > 2, m > 3, and (n+m) < 25 and R₁ as organic radical,
- derivatives of polyalkylene glycols of the general formula R₁-O-(R₂-O)ₙ-H, where R₂ = alkylene and n ≥ 2, in which the hydrogen of one of the two terminal hydroxyl groups of the polyalkylene glycol has been replaced by an organic radical R₁,
as an additive improving sound insulation in films produced from plasticized partially acetalized polyvinyl alcohol resin and having a water content of from 0.15 to 0.8% by weight for laminated safety glass, where the sound insulation of the laminated safety glass is increased by the addition of the polyalkylene glycols by at least 2 dB, measured to DIN EN ISO 717, in the coincidence frequency region from 1000 to 3500 Hz.

## Revendications

1. Verre feuilleté de sécurité comprenant
- une première et une deuxième vitre, ainsi que
- une couche intermédiaire, disposée entre la première et la deuxième vitre, la couche intermédiaire ayant une teneur en eau comprise entre 0,15 et 0,8 % en poids et contenant :
- de 50 à 80 % en poids de poly(alcool vinylique) partiellement acétalisé,
- de 20 à 50 % en poids d'un mélange d'agents plastifiants, contenant
- de 30 à 70 % en poids - rapporté au mélange d'agents plastifiants - d'un ou de plusieurs polyalkylèneglycols choisis dans le groupe formé par
• les polyalkylèneglycols de formule générale HO-(R-O)ₙ-H où R représente un groupe alkylène et n > 5,
• les copolymères séquencés d'éthylène et de propylèneglycol de formule générale HO-(CH₂-CH₂-O)ₙ-(CH₂-CH(CH₃)-O)ₘ-H où n > 2, m > 3 et (n + m) < 25,
• les dérivés de copolymères séquencés d'éthylène- et de propylèneglycol de formule générale
R₁O-(CH₂-CH₂-O)ₙ-(CH₂CH(CH₃)-O)ₘ-H
ou
HO-(CH₂-CH₂-O)ₙ-(CH₂-CH(CH₃)-O)ₘ-R₁
où n > 2, m > 3 et (n + m) < 25 et R₁ représente un résidu organique,
• les dérivés de polyalkylèneglycols de formule générale R₁-O-(R₂-O)ₙ-H où R₂ représente un groupe alkylène et n ≥ 2, l'atome d'hydrogène d'un des deux groupes hydroxyle terminaux du polyalkylèneglycol étant remplacé par un résidu organique R₁,
la fraction des polyalkylèneglycols dans la masse totale formant la couche intermédiaire étant supérieure à 5 % en poids.

2. Verre feuilleté de sécurité selon la revendication 1, **caractérisé par le fait que** les polyalkylèneglycols sont choisis dans le groupe formé par
• les polyéthylèneglycols de formule HO-(CH₂-CH₂-O)ₙ-H où 8 < n < 25,
• les copolymères séquencés d'éthylène- et de propylèneglycol de formule générale HO-(CH₂-CH₂-O)ₙ-(CH₂-CH(CH₃)-O)ₘ-H où n > 3, m > 4 et (n + m) < 20,
• les dérivés de copolymères séquencés d'éthylène- et de propylèneglycol de formule générale
R₁O-(CH₂-CH₂-O)ₙ-(CH₂CH(CH₃)-O)ₘ-H
ou
HO-(CH₂-CH₂-O)ₙ-(CH₂-CH(CH₃)-O)ₘ-R₁
où n > 3, m > 4 et (n + m) < 20 et R₁ représente un résidu organique,
• les polybutylèneglycols de formule
HO-(CH₂-CH₂-CH₂-CH₂-O)ₙ- H
où 4 < n < 18,
• les dérivés de polyéthylèneglycol de formule générale
R₁-O-(CH₂-CH₂-O)ₙ-H
où n ≥ 2 et R₁ représente un résidu organique,
• les dérivés de polybutylèneglycol de formule générale
R₁-O-(CH₂-CH₂-CH₂-CH₂-O)ₙ-H
où n ≥ 2 et R₁ représente un résidu organique.

3. Verre feuilleté de sécurité selon la revendication 1 ou 2, **caractérisé par le fait que** la fraction des polyalkylèneglycols dans masse totale formant la couche intermédiaire est supérieure à 10 % en poids et inférieure à 25 % en poids.

4. Verre feuilleté de sécurité selon l'une des revendications 1 à 3, **caractérisé par le fait que** l'on utilise comme agent plastifiant supplémentaire dans le mélange d'agents plastifiants au moins un agent plastifiant choisi dans le groupe formé par
- les esters de polyacides aliphatiques ou aromatiques,
- les esters d'alcools aliphatiques ou aromatiques polyvalents ou d'oligoétherglycols comprenant au plus 4 motifs éther, portant un ou plusieurs substituants aliphatiques ou aromatiques, linéaires ou ramifiés, comme par exemple un adipate de dialkyle, un sébaçate de dialkyle, les esters de di-, tri- ou tétraglycols et d'acides carboxyliques aliphatiques linéaires ou ramifiés.

5. Verre feuilleté selon la revendication 4, **caractérisé par le fait que** l'on utilise, comme agent plastifiant supplémentaire, une quantité supérieure à 10 % en poids, rapporté à la masse totale, d'au moins un agent plastifiant choisi dans le groupe formé par l'adipate de di-n-hexyle (DHA) et le bis-n-heptanoate de triéthylèneglycol (3G7).

6. Verre feuilleté de sécurité selon l'une des revendications 1 à 5, **caractérisé par le fait que** l'on utilise, en tant que résine du poly(vinylbutyral) comportant de 19 à 22 % en poids de motifs alcool vinylique et de 0,5 à 2,5 % en poids de motifs acétate de vinyle.

7. Feuille isolant acoustique pour la fabrication de verres feuilletés de sécurité, contenant
- de 0,15 à 0,8 % en poids d'eau,
- de 50 à 80 % en poids de poly(alcool vinylique) partiellement acétalisé,
- de 20 à 50 % en poids d'un mélange d'agents plastifiants, contenant
- de 30 à 70 % en poids - rapporté au mélange d'agents plastifiants - d'un ou de plusieurs polyalkylèneglycols choisis dans le groupe formé par
• les polyalkylèneglycols de formule générale HO-(R-O)ₙ-H où R représente un groupe alkylène et n > 5,
• les copolymères séquencés d'éthylène- et de propylèneglycol de formule générale HO-(CH₂-CH₂-O)ₙ-(CH₂-CH(CH₃)-O)ₘ-H où n > 2, m > 3 et (n + m) < 25,
• les dérivés de copolymères séquencés d'éthylène- et de propylèneglycol de formule générale
R₁O-(CH₂-CH₂-O)ₙ-(CH₂CH(CH₃)-O)ₘ-H
ou
HO-(CH₂-CH₂-O)ₙ-(CH₂-CH(CH₃)-O)ₘ-R₁
où n > 2, m > 3 et (n + m) < 25 et R₁ représente un résidu organique,
• les dérivés de polyalkylèneglycols de formule générale R₁-O-(R₂-O)ₙ-H où R₂ représente un groupe alkylène et n ≥ 2, l'atome d'hydrogène d'un des deux groupes hydroxylé terminaux du polyalkylèneglycol étant remplacé par un résidu organique R₁,
la fraction des polyalkylèneglycols dans la masse totale formant la couche intermédiaire étant supérieure à 5 % en poids.

8. Utilisation d'un ou de plusieurs polyalkylèneglycols choisis dans le groupe formé par les
• les polyalkylèneglycols de formule générale HO-(R-O)ₙ-H où R représente un groupe alkylène et n > 5,
• les copolymères séquencés d'éthylène- et de propylèneglycol de formule générale HO-(CH₂-CH₂-O)ₙ-(CH₂-CH(CH₃)-O)ₘ-H où n > 2, m > 3 et (n + m) < 25,
• les dérivés de copolymères séquencés d'éthylène- et de propylèneglycol de formule générale
R₁O-(CH₂-CH₂-O)ₙ-(CH₂CH(CH₃)-O)ₘ-H
ou
HO-(CH₂-CH₂-O)ₙ-(CH₂-CH(CH₃)-O)ₘ-R₁
où n > 2, m > 3 et (n + m) < 25 et R₁ représente un résidu organique,
• les dérivés de polyalkylèneglycols de formule générale R₁-O-(R₂-O)ₙ-H où R₂ représente un groupe alkylène, et n ≥ 2, l'atome d'hydrogène d'un des deux groupes hydroxyle terminaux du polyalkylèneglycol étant remplacé par un résidu organique R₁,
en tant qu'additif améliorant le pouvoir isolant acoustique de feuilles en résine de poly(alcool vinylique) partiellement acétalisé, plastifiées, ayant une teneur en eau comprise entre 0,15 et 0,8 % en poids, pour des verres feuilletés de sécurité, le pouvoir isolant acoustique du verre feuilleté de sécurité, mesuré conformément à la norme EN ISO 717 pour une fréquence de coïncidence comprise entre 1000 et 3500 Hz, étant amélioré d'au moins 2 dB, grâce à l'addition des polyalkylèneglycols.
